Europäisches Patentamt

(19) European Patent Office

Office européen des brevets

(11) Numéro de publication : **0 289 892 B1**

(12) **FASCICULE DE BREVET EUROPEEN**

(45) Date de publication du fascicule du brevet :
17.04.91 Bulletin 91/16

(51) Int. Cl.⁵ : **A61C 13/235**

(21) Numéro de dépôt : **88106541.1**

(22) Date de dépôt : **23.04.88**

(54) **Dispositif magnétique d'assemblage, notamment pour prothèse dentaire.**

(30) Priorité : 30.04.87 FR 8706228

(43) Date de publication de la demande :
09.11.88 Bulletin 88/45

(45) Mention de la délivrance du brevet :
17.04.91 Bulletin 91/16

(84) Etats contractants désignés :
**AT BE CH DE ES GB GR IT LI LU NL SE**

(56) Documents cités :
**FR-A- 2 586 926**
**FR-A- 2 587 895**

(73) Titulaire : **Comadur SA**
**Chemin des Tourelles 17**
**CH-2400 Le Locle (CH)**

(72) Inventeur : **Schwab, Michel**
**Rue du Cornouiller 4**
**CH-2502 Bienne (CH)**

(74) Mandataire : **Caron, Gérard et al**
**ICB Ingénieurs Conseils en Brevets SA**
**Passage Max. Meuron 6**
**CH-2001 Neuchâtel (CH)**

## Description

La présente invention concerne un dispositif d'assemblage magnétique comportant un aimant permanent en tant que source de potentiel magnétique génératrice des forces d'assemblage. Plus particulièrement, l'invention concerne un dispositif d'assemblage de ce type apte à être utilisé dans des atmosphères chimiquement agressives sans possibilité d'altération des forces d'assemblage.

Parmi les applications d'un tel dispositif d'assemblage, l'on peut mentionner celle qui est habituellement utilisée en odontologie pour la rétention des prothèses dentaires.

Ainsi, il est connu du brevet US-A-4,431,419, un dispositif de rétention pour prothèse dentaire comportant une capsule solidaire de la prothèse dentaire et formée d'un boîtier en une matière ferromagnétique dans lequel est logé l'aimant permanent. Ce boîtier forme partie d'un circuit magnétique qui, lorsque la prothèse est en place, est fermé par une contre-pièce en une matière ferromagnétique ancrée dans la denture. Le boîtier est hermétiquement obturé par un opercule qui protège l'aimant du milieu salivaire.

Dans cette réalisation antérieure, l'opercule est en matière plastique, plus particulièrement en une résine acrylique, qui vient recouvrir l'une des faces de l'aimant et qui est étanche contre la périphérie intérieure de la paroi du boîtier.

Lorsque la capsule et la contre-pièce sont assemblées, cet opercule vient ainsi s'interposer entre l'aimant et la contre-pièce formant de ce fait un entrefer, c'est-à-dire un passage à haute réluctance vis-à-vis de la circulation du flux engendré par l'aimant permanent. Il en résulte donc une force d'assemblage qui est sans commune mesure avec la force que l'aimant pourrait engendrer en l'absence de l'entrefer.

Un autre inconvénient de cette disposition antérieure réside dans le fait qu'une partie importante du flux magnétique circule selon des trajets de fuite à travers les zones de la bouche voisines de la prothèse ce qui peut être nocif pour le porteur de celle-ci et, en tout cas, fait hésiter les dentistes à utiliser de telles prothèses pour leurs patients.

La demande de brevet français no 86.06805 du 9 mai 1986 (qui ne représente pas un état de la technique selon l'article 54 CBE) apporte un début de solution aux problèmes soulevés par le dispositif d'assemblage du brevet US-A-4,431,419 en ce qu'elle propose de remplacer l'opercule en matière plastique par un opercule formé d'une très mince pastille en un matériau d'aimant permanent.

Cependant, si cette solution apporte, certes, une amélioration sur le plan magnétique puisqu'elle revient à réduire l'importance de l'entrefer, elle crée, au contraire, des difficultés sur le plan de la fabrication et de l'étanchéité, puisque la pastille doit être soudée sur le boîtier ou sertie entre le bord de la paroi périphérique du boîtier et l'aimant lui-même. En outre, la fabrication d'une mince pastille de ce type est difficile à mettre en oeuvre.

Un dispositif magnétique comme défini dans la première partie de la revendication 1 est exposé dans le document FR-A-2 587 895 (Fig. 6).

L'invention a pour but de proposer un dispositif d'assemblage à aimant permanent alliant une bonne protection de ce dernier à une efficacité d'attraction magnétique maximale, le rendant particulièrement approprié pour être utilisé en odontologie.

L'invention a donc pour objet un dispositif magnétique d'assemblage de deux objets dont le premier comporte une capsule aimantée et le second une contre-pièce en une matière ferromagnétique, ladite capsule comprenant, d'une part, un boîtier en une matière ferromagnétique, dans lequel est logé un aimant permanent et qui forme partie d'un circuit magnétique pour le flux de cet aimant, ce circuit étant fermé par ladite contre-pièce lorsque les deux objets sont assemblés et, d'autre part, un couvercle pour la fermeture hermétique dudit boîtier, caractérisé en ce que ledit couvercle est en une matière ferromagnétique, en ce que le fond et la paroi du boîtier sont connectés l'un à l'autre par une mince cloison périphérique constituant une zone saturable délimitant à la base de ladite paroi une pièce polaire périphérique qui, avec ladite contre-pièce et ledit fond forment un trajet de faible reluctance pour le flux dudit aimant.

Grâce à ces caractéristiques, le circuit magnétique conduisant le flux de l'aimant permanent est fermé à travers le fond du boîtier, la contre-pièce et la paroi latérale du boîtier, sans interposition d'un entrefer, car le fond et la base périphérique de cette paroi latérale peuvent être en appui direct sur la contre-pièce. Les lignes de force magnétique engendrées par l'aimant permanent sont donc exploitées pratiquement dans leur totalité.

Quant à l'étanchéité, elle est garantie totalement à l'interface de la capsule et de la contre-pièce puisque le fond, la cloison intermédiaire et la paroi latérale ne forment qu'une pièce, tandis que côté couvercle, on peut aisément prévoir une fermeture étanche par soudage, par exemple, le couvercle et le boîtier étant tous deux réalisés en une matière ferromagnétique. En outre, la partie du boîtier opposée à la contre-pièce peut facilement être enrobée dans l'objet qui reçoit la capsule pour garantir encore mieux cette étanchéité. Ceci est notamment le cas dans l'application du dispositif pour la rétention des prothèses dentaires dans lesquelles la capsule peut être moulée dans la structure de la prothèse, seule la face extérieure côté contre-pièce de la capsule restant exposée.

L'invention sera mieux comprise à la lecture de la description qui va suivre d'un exemple de réalisation de l'invention :

Aux dessins annexés, donnés uniquement à titre d'exemple :

– la figure 1 représente une vue d'ensemble en coupe d'un dispositif d'assemblage magnétique suivant l'invention, dans son application à la rétention d'une prothèse dentaire ;

– la figure 2 est une vue en coupe, à plus grande échelle, du dispositif d'assemblage suivant l'invention ;

– la figure 3 représente un diagramme des lignes de flux engendrées par l'aimant dans le dispositif d'assemblage magnétique.

Bien que la description qui va suivre concerne spécifiquement l'application de l'invention à l'odontologie, il est clair que le dispositif d'assemblage magnétique conforme à l'invention peut être utilisé avec profit dans tous les cas où il doit assurer un assemblage solide de deux objets avec un encombrement minimal et présenter une protection efficace de l'aimant contre le milieu environnant.

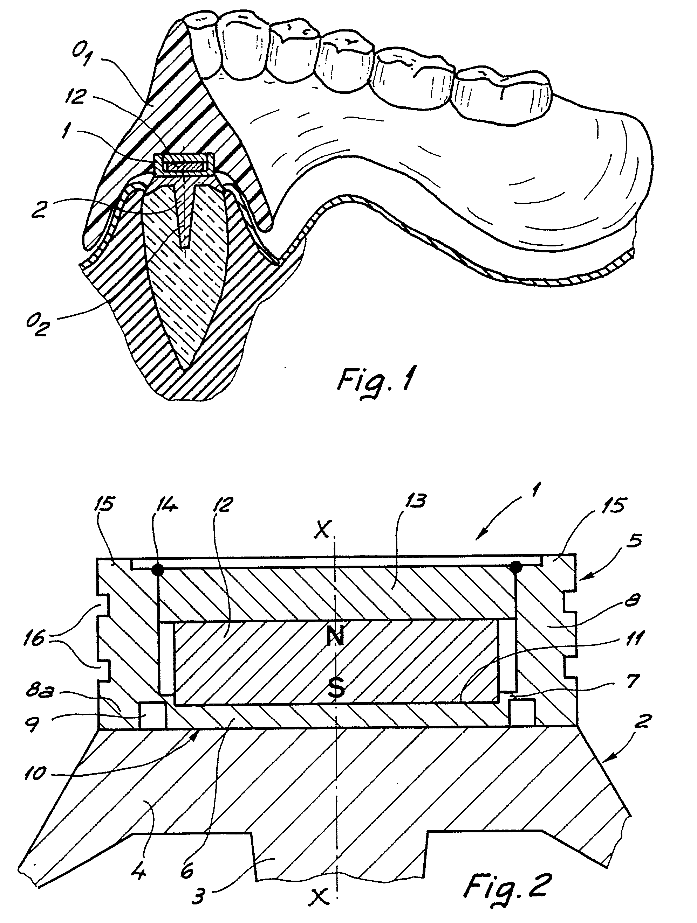

La figure 1 montre un dispositif d'assemblage magnétique dont la capsule 1 est fixée dans une premier objet $O_1$, à savoir une prothèse dentaire et dont la contre-pièce 2 est ancrée dans un second objet $O_2$, en l'occurrence la racine d'une dent.

La contre-pièce ou implant 2 est formé par une tige 3 (figure 2) destinée à être cimentée de la manière habituelle dans le canal radiculaire de la racine de la dent, cette tige étant surmontée d'une coiffe 4 adaptée à la forme de la muqueuse gingivale. Cette coiffe peut être circulaire.

La capsule 1 comprend un boîtier 5 réalisé en une matière ferromagnétique, telle qu'un alliage de type ferro-nickel à haute induction de saturation. La matière vendue sous la marque "Permanom" de la maison Vacuum Schmelz à Hanau, Allemagne Fédérale, peut convenir. La forme extérieure du boîtier 5 peut être autre que cylindrique, surtout dans le cas d'une application différente de celle envisagée ici.

Le boîtier 5 présente un fond 6, une cloison périphérique 7 entourant ce fond et une paroi extérieure 8 dont la base 8a est partiellement entaillée par une rainure circulaire 9 s'ouvrant vers la face d'application 10 de la capsule (la face inférieure de la capsule dans la position représentée sur les figures). La profondeur de cette rainure détermine l'épaisseur de la cloison 7 et d'une façon importante le comportement magnétique de l'ensemble.

Le fond 6 est creusé pour former un logement 11 par la partie inférieure d'un aimant permanent 12, dont les pôles Nord et Sud sont respectivement situés aux deux faces d'extrémité, étant entendu que l'aimant peut être placé dans une position opposée à celle représentée. Le flux engendré par cet aimant est donc orienté selon l'axe X-X du dispositif d'assemblage. De préférence, l'aimant 12 est réalisé en un alliage à haut produit d'énergie comme par exemple le samarium-cobalt.

Un couvercle 13 en matériau ferromagnétique est ajusté dans le haut du boîtier 5. Il est fixé en place à l'aide d'un cordon de soudure périphérique 14 obtenu par soudage au laser, par exemple. Pour éviter que ce cordon ne dépasse de la face supérieure de la capsule 1, la paroi extérieure 8 est munie d'un rebord annulaire surélevé 15.

La surface extérieure cylindrique de la paroi 8 est munie de deux rainures annulaires 16 pour faciliter l'ancrage de la capsule 1 dans le corps de la prothèse dentaire.

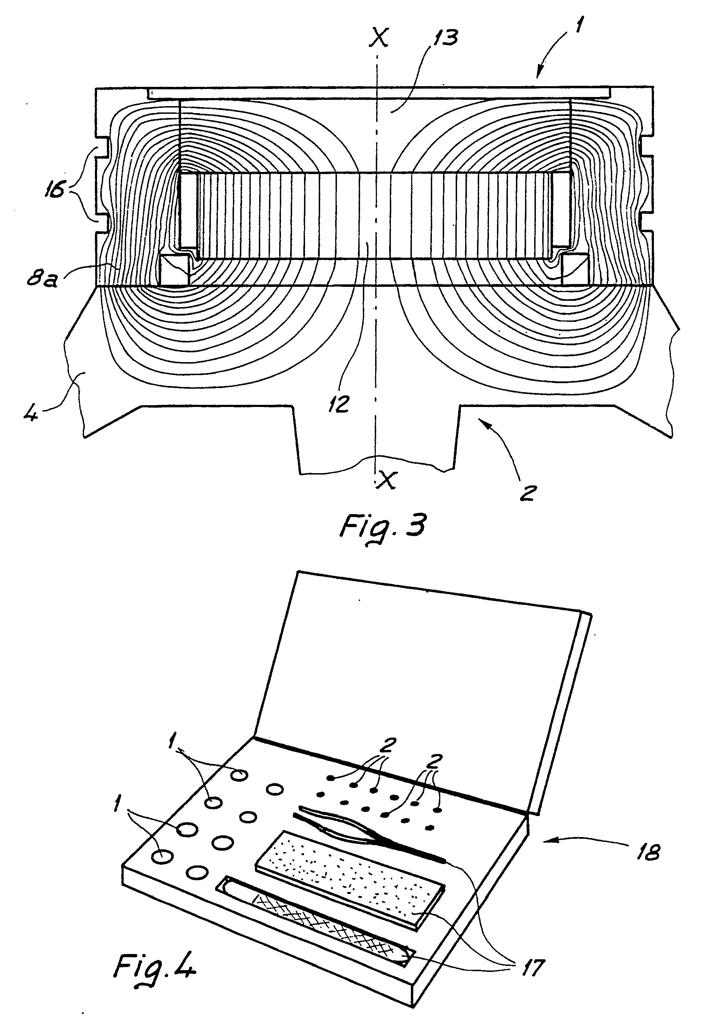

La figure 3 montre un diagramme des lignes de force du champ magnétique engendré dans la capsule 1. Le passage étroit formé par la cloison périphérique 7 est dimensionné pour qu'il soit saturé afin de constituer une zone à très haute reluctance magnétique. De ce fait, les lignes de force sont concentrées à la base 8a de la paroi périphérique du boîtier où elles créent une force d'attraction élevée. Ainsi, cette base forme une pièce polaire périphérique.

Ces lignes de force passent dans la coiffe 4 et reviennent au fond 6, sans passer par un entrefer susceptible de créer une réluctance magnétique notable. Pour réduire à une valeur négligeable cette reluctance d'entrefer, les faces en contact sont, de préférence, soigneusement polies.

Du côté opposé de l'aimant, les lignes de force circulent à travers le couvercle 13 et de là dans la paroi extérieure 8 sans également rencontrer d'entrefer, le couvercle 13 étant ajusté avec précision au diamètre de l'ouverture du boîtier 5.

En pratique, il s'est avéré qu'un boîtier d'un diamètre extérieur de l'ordre de 4,5 mm, d'une hauteur de 2,00 mm, pourvu d'un aimant au samarium-cobalt d'un diamètre de l'ordre de 3 mm et d'une hauteur d'environ 1 mm, peut comporter une cloison 13 d'une épaisseur située entre 0,05 et 0,1 mm suivant les forces d'attraction à obtenir. Bien entendu, d'autres dimensionnements du dispositif d'assemblage sont possibles tant dans le cadre de l'application que l'on vient de décrire que dans d'autres applications de l'invention.

En revenant à la figure 1, on voit que, comparé aux propositions de la technique antérieure, le dispositif d'assemblage pour prothèse dentaire suivant l'invention, comporte une capsule 1 qui est positionnée à l'envers, c'est-à-dire avec un fond qui est appliqué sur la coiffe de l'implant. A sa face opposée, cette capsule est en contact direct avec la matière plastique dont est constituée la prothèse dentaire. Il en résulte une parfaite étanchéité de la capsule et une protection efficace de l'aimant contre les agressions du milieu salivaire. L'aimant conserve donc ses propriétés magnétiques quelle que soit la durée d'utilisation de la prothèse.

Il s'est avéré également que le flux magnétique est contenu pratiquement intégralement à l'intérieur des pièces du dispositif d'assemblage, de sorte que celui-ci est bio-compatible sans influencer défavorablement l'environnement biologique par des champs de fuite.

Il est clair, par ailleurs pour les spécialistes en odontologie, que la contre-pièce peut être fixée en bouche d'une autre façon que celle représentée, par exemple latéralement sur la couronne d'une dent d'une prothèse, la contre-pièce étant alors adaptée en conséquence.

La figure 4 montre que l'invention peut être mise en oeuvre sous la forme d'un nécessaire 17 de confection de prothèse dentaire comprenant en dehors de plusieurs outils 18 connus en soi, un jeu de dispositifs d'assemblage suivant l'invention, composés chacun d'une capsule 1 et d'un implant 2, et permettant au praticien de choisir parmi les différentes pièces de dimensions différentes, celles convenant le mieux à son patient.

## Revendications

1. Dispositif magnétique d'assemblage de deux objets dont le premier ($0_1$) comporte une capsule aimantée (1) et le second ($0_2$) une contre-pièce (2) en une matière ferromagnétique, ladite capsule (1) comprenant, d'une part, un boîtier (5) en une matière ferromagnétique, dans lequel est logé un aimant permanent (12) et qui forme partie d'un circuit magnétique pour le flux de cet aimant, ce circuit étant fermé par ladite contre-pièce (2), lorsque les deux objets ($0_1$, $0_2$) sont assemblés et, d'autre part, un couvercle (13) en une matière ferromagnétique pour la fermeture hermétique dudit boîtier (5), caractérisé en ce que le fond (6) et la paroi (8) du boîtier sont connectés l'un à l'autre par une mince cloison périphérique constituant une zone saturable délimitant à la base (8a) de ladite paroi (8) une pièce polaire périphérique qui, avec ladite contre-pièce (2) et ledit fond (6), forment un trajet de faible reluctance pour le flux dudit aimant (12).

2. Dispositif d'assemblage suivant la revendication 1, caractérisé en ce que, en configuration assemblée, le couvercle (13) du boîtier (5) est situé à la face de celui-ci opposée à la face (10) qui est appliquée contre ladite contre-pièce (2).

3. Dispositif d'assemblage suivant l'une quelconque des revendications 1 et 2, caractérisé en ce que ladite capsule (1) est de forme cylindrique à base circulaire.

4. Dispositif d'assemblage suivant l'une quelconque des revendications 1, 2 et 3, caractérisé en ce que ladite cloison périphérique (7) est délimitée entre le fond (6) du boîtier (5) et la base (8a) de sa paroi périphérique (8), par une rainure annulaire (9) creusée dans la face (10) de la capsule (1) qui est en appui sur la contre-pièce (2) en configuration assemblée du dispositif.

5. Dispositif d'assemblage suivant l'une quelconque des revendications 1 à 4, caractérisé en ce que ledit aimant (12) est disposé au moins partiellement dans un logement (11) pratiqué à l'intérieur dans le fond (6) du boîtier (5).

6. Dispositif d'assemblage suivant l'une quelconque des revendications 1 à 5, caractérisé en ce que ledit couvercle (13) est formé par une rondelle ajustée dans l'ouverture dudit boîtier (5) et solidaire de celui-ci par une soudure périphérique.

7. Nécessaire de confection de prothèse dentaire, caractérisé en ce qu'il comporte au moins un dispositif d'assemblage formé d'une capsule (1) et d'une contre-pièce (2), suivant l'une quelconque des revendications 1 à 6, et destiné à être incorporé dans ladite prothèse et à être fixé sur une dent d'un patient.

8. Prothèse dentaire comportant une capsule (1) faisant partie d'un dispositif d'assemblage suivant l'une quelconque des revendications 1 à 6.

## Ansprüche

1. Magnetische Montagevorrichtung zweier Gegenstände, deren erster ($0_1$) eine magnetisierte Kapsel (1) und deren zweiter ($0_2$) ein Gegenstück (2) aus einem ferromagnetischen Material umfaßt, welche Kapsel (1) einerseits ein Gehäuse (5) aus einem ferromagnetischen Material umfaßt, in dem ein Permanentmagnet (12) untergebracht ist und das einen Abschnitt eines Magnetkreises für den Fluß dieses Magneten bildet, welcher Kreis geschlossen wird durch das Gegenstück (2), während die beiden Gegenstände ($0_1$, $0_2$) verbunden sind und andererseits einen Deckel (13) aus einem ferromagnetischen Material für das hermetische Verschließen des Gehäuses (5) umfaßt, dadurch gekennzeichnet, daß der Boden (6) und die Wandung (8) des Gehäuses miteinander durch einen dünnen peripheren Abschluß verbunden sind, der eine sättigbare Zone bildet und an der Basis (8a) der genannten Wandung (8) ein peripheres Polstück begrenzt, das mit dem Gegenstück (2) und dem Boden (6) einen Pfad geringer Reluktanz für den Fluß des Magneten (12) bildet.

2. Montagevorrichtung nach Anspruch 1, dadurch gekennzeichnet, daß in montierter Konfiguration der Deckel (13) des Gehäuses (5) auf der Seite desselben gegenüber der Seite (10) angeordnet ist, die gegen das Gegenstück (2) angelegt wird.

3. Montagevorrichtung nach einem der Ansprüche 1 und 2, dadurch gekennzeichnet, daß die Kapsel (1) zylindrische Form mit runder Basis aufweist.

4. Montagevorrichtung nach einem der Ansprüche 1, 2 und 3, dadurch gekennzeichnet, daß der periphere Abschluß (7) zwischen dem Boden (6) des Gehäuses und der Basis (8a) seiner peripheren Wandung (8) von einer Ringnut (9) begrenzt ist, die in die Seite (10) der Kapsel (1) eingearbeitet ist, welche in montierter Konfiguration der Vorrichtung an dem Gegenstück (2) anliegt.

5. Montagevorrichtung nach einem der Ansprüche 1 bis 4, dadurch gekennzeichnet, daß der Magnet (12) mindestens teilweise in einer Ausnehmung (11) angeordnet ist, die in das Innere des Bodens (6) des Gehäuses (5) eingearbeitet ist.

6. Montagevorrichtung nach einem der Ansprüche 1 bis 5, dadurch gekennzeichnet, daß der Deckel (13) von einer Scheibe gebildet wird, eingepaßt in die Öffnung des Gehäuses (5) und mit diesem durch eine Umfangslötung verbunden.

7. Konfektionsgarnitur für Zahnprothese, dadurch gekennzeichnet, daß sie mindestens eine Montagevorrichtung bestehend aus einer Kapsel (1) und einem Gegenstück (2) nach einem der Ansprüche 1 bis 6 umfaßt und bestimmt ist zum Einfügen in die Prothese und zum Befestigen auf einem Zahn eines Patienten.

8. Zahnprothese, umfassend eine Kapsel (1), welche einen Teil einer Montagevorrichtung gemäß einem der Ansprüche 1 bis 6 bildet.


## Claims

1. Magnetic assembly means for the assembly of two objects the first ($0_1$) of which has a magnetic capsule (1) and the second ($0_2$) a counterpiece (2) of a ferromagnetic material, said capsule (1) comprising, on the one hand, a casing (5) of a ferromagnetic material in which is housed a permanent magnet (12) and which forms part of a magnetic circuit for the flux of this magnet, this circuit being closed by said counterpiece (2) when the two objects ($0_1$, $0_2$) are assembled and, on the other hand, a cover (13) of a ferromagnetic material for the hermetic sealing of said casing (5), characterized in that the bottom (6) and the wall (8) of the casing are connected to one another by a thin peripheral partition constituting a saturable zone delimiting at the base (8a) of said wall (8) a peripheral polar piece which, with said counterpiece (2) and said bottom (6), forms a path of low reluctance for the flux of said magnet (12).

2. Assembly means according to claim 1, characterized in that, in assembled configuration, the cover (13) of the casing (5) is situated in the face of the latter opposite the face (10) which is to be adjacent to said counterpiece (2).

3. Assembly means according to any one of claims 1 and 2, characterized in that said capsule (1) is of cylindrical shape with a circular base.

4. Assembly means according to any one of claims 1, 2 and 3, characterized in that said peripheral partition (7) is situated between the bottom (6) of the casing (5) and the base (8a) of its peripheral wall (8) and is bound by an annular groove (9) sunk into the face (10) of the capsule (1) which is to be adjacent to the counterpiece (2) of the means in the assembled configuration.

5. Assembly means according to any one of claims 1 to 4, characterized in that said magnet (12) is disposed at least partially in a housing (11) provided in the inside of the bottom (6) of the casing (5).

6. Assembly means according to any one of claims 1 to 5, characterized in that said cover (13) is formed by a washer fitted in the opening of said casing (5) and fixed thereto by means of a peripheral weld.

7. Kit for the manufacture of a dental prosthesis, characterized in that it comprises at least an assembly means formed in a capsule (1) and a counterpiece (2), according to any one of claims 1 to 6, and adapted to be incorporated into said prosthesis and to be fixed on the tooth of a patient.

8. Dental prosthesis comprising a capsule (1) forming part of an assembly means according to any one of claims 1 to 6.

Fig. 1

Fig. 2

Fig. 3

Fig. 4